# EUROPÄISCHE PATENTSCHRIFT

(11) **EP 3 231 568 B1**
(45) Veröffentlichungstag und Bekanntmachung des Hinweises auf die Patenterteilung: **07.06.2023**
(21) Anmeldenummer: 16164916.5
(22) Anmeldetag: 12.04.2016
(51) Int. Cl.: B27N 7/00, E04C 2/24, E04F 15/18, B32B 7/12, B32B 21/08, B32B 21/10, B32B 23/04, B32B 27/30, B32B 27/32, B32B 27/36, B32B 27/42, B32B 21/04

(54) **VERFAHREN ZUM AUFBRINGEN EINER FOLIE ODER EINER PLATTE AUF EINE HOLZWERKSTOFFPLATTE**
METHOD FOR APPLYING A FILM OR A SHEET ON A COMPOSITE WOOD BOARD
PROCEDE D'APPLICATION D'UNE FEUILLE OU D'UNE PLAQUE SUR UN PANNEAU À BASE DE BOIS

(43) Veröffentlichungstag der Anmeldung: 18.10.2017
(73) Patentinhaber: SWISS KRONO Tec AG, 6004 Luzern (CH)
(72) Erfinder: BRAUN, Roger, 6130 Willisau (CH)
(74) Vertreter: Kalkoff & Partner Patentanwälte mbB

(56) Entgegenhaltungen:
- EP-A1- 0 573 676
- EP-A1- 1 460 095
- EP-A1- 1 690 603
- EP-A1- 2 774 770
- EP-A2- 1 764 207
- EP-A2- 2 653 513
- WO-A1-2005/116361
- DE-A1- 10 019 233
- DE-A1-102004 031 547
- DE-A1-102014 010 747
- US-A1- 2008 193 785

## Beschreibung

Die Erfindung betrifft ein Verfahren zum Aufbringen einer Folie oder einer Platte auf eine Holzwerkstoffplatte und eine Holzwerkstoffplatte, die mit einer Folie oder Platte beschichtet ist.

Die EP 0 573 676 A1 beschreibt eine neue Verwendung für release-Folien, bei der Lack auf eine release-Folie aufgetragen wird, um dann auf ein Substrat übertragen zu werden. Die DE 100 19 233 A1 beschreibt das bekannte Beschichten einer Folie mit Lack und das nachfolgende Aufbringen der Folie auf ein Substrat, wobei der Lack nach außen, vom Substrat weg weist.

Folien werden auf Holzwerkstoffplatten, insbesondere auf mit einem Dekor versehenen Holzwerkstoffplatten, aufgebracht, um die Oberfläche der Platte zu schützen, sie z. B. kratzfester zu machen, oder um besondere ästhetische Effekte zu erzielen, z. B. mit matten oder glänzenden Folien. Die Folien werden meist aufgeklebt, so wie in einem Beitrag von T. Hippold, Jowat AG, auf dem 12. Jowat-Sympsium 2008 "Lackieren Sie noch oder folieren Sie schon?" unter Verwendung von Polyurethan-Hotmelt-Klebstoffen beschrieben.

Nachteilig an diesem Verfahren ist, dass die Klebstoffschicht, die zwischen Holzwerkstoffplatte und Folie liegt, die Wiedergabe bzw. die optische Wahrnehmung des Betrachters der Holzwerkstoffplatte bzw. des auf die Holzwerkstoffplatte aufgebrachten Dekors negativ beeinflusst. Es ist also Aufgabe der Erfindung, ein Verfahren zum Aufbringen einer Folie auf eine Holzwerkstoffplatte so zu verbessern, dass die optische Wahrnehmung einer Holzwerkstoffplatte bzw. des darauf aufgebrachten Dekors möglichst wenig beeinträchtigt ist.

Diese Aufgabe wird gelöst mit einem Verfahren nach Anspruch 1 und mit einer Holz-Soweit nachfolgend von einer Folie die Rede ist, beziehen sich diese Ausführungen auch auf eine alternativ aufzubringende Platte. Die Folie oder die Platte ist insbesondere aus transparentem Kunststoff und wird nachstehend näher beschrieben.

Der niedrigviskose UV- oder strahlungshärtende Lack, nachfolgend kurz als Lack bezeichnet, ist ein in der Regel wasserbasierter Lack, vorteilhaft ein Lack basierend auf einer Polyester-, Acrylat-, Epoxyacrylat- oder Urethanverbindung. Bevorzugt wird also eine niedrigviskose Acrylatverbindung, eine Polyester-, Urethan- oder Epoxyacrylatverbindung zum Aufbringen der Folie oder Platte auf die Holzwerkstoffplatte eingesetzt.

Wesentlich ist, dass es sich um einen niedrigviskosen Lack handelt, der gemäß DIN 53211 bei einer Temperatur von 23°C und einem Düsendurchmesser des Auslaufbechers von 4 mm eine Auslaufzeit von insbesondere unter 120 Sekunden, bevorzugt von unter 50 Sekunden, vorteilhaft von unter 30 Sekunden, besonders bevorzugt von 10 Sekunden oder mehr hat. Bei einem Düsendurchmesser des Auslaufbechers von 6 mm beträgt die Auslaufzeit bevorzugt maximal 240 Sekunden, vorteilhaft bis 180 Sekunden, besonders bevorzugt bis zu 120 Sekunden, besonders vorteilhaft bis zu 50 Sekunden.

Vorteilhafterweise beträgt die Auslaufzeit mindestens 10 Sekunden bei einem Düsendurchmesser des Auslaufbechers von 6 mm. Die Untergrenze der Viskosität ergibt sich aus der minimalen Viskosität, mit der ein UV- oder strahlungshärtender Lack technisch herstellbar ist. Ein niederviskoser Lack ist fließfähig, so dass einzelne Tröpfchen, die auf eine Folie oder Holzwerkstoffplatte aufgebracht werden, schnell zu einem Film ineinander verfließen. Der UV- oder strahlungshärtende Lack, insbesondere z. B. eine Acrylatverbindung, ist erfindungsgemäß transparent. Dem Lack können Farbpigmente zugesetzt sein; diese sollen jedoch in der Regel eine Wahrnehmung des Dekors auf der Holzwerkstoffplatte nicht stören. Die Holzwerkstoffplatte kann entweder unmittelbar mit einem Dekor versehen sein, z. b. durch Auftragen von Farbe. Die Holzwerkstoffplatte kann aber auch eine Beschichtung aufweisen, z. B. einen Schichtstoff, der vorteilhaft Melamin als Bindemittel enthält.

Nach dem Aufbringen des UV- oder strahlungshärtenden Lacks wird die Folie oder Platte auf die Holzwerkstoffplatte aufgebracht, z. B. durch einen Rollenkalander oder eine Andruckwalze. Die Folie ist danach durch den auf der Holzwerkstoffplatte haftenden Lack, z. B. eine Acrylatverbindung, zunächst fixiert; es besteht aber noch keine dauerhafte Verbindung. Erst durch das Aushärten des Lacks wird erfindungsgemäß diese dauerhafte Verbindung zwischen Folie und Holzwerkstoffplatte hergestellt; die Folie bzw. die Platte ist damit auf die Holzwerkstoffplatte aufgebracht und die Holzwerkstoffplatte ist mit einer Folie oder Platte kaschiert.

Im Gegensatz zu der bisherigen Verwendung von Polyurethanverbindungen (PUR-Verbindungen), z. B. Hot-Melt-Klebstoffen, die mit wesentlich höherer Viskosität eingesetzt werden, verläuft der niederviskose UV- oder strahlungshärtende Lack, z. B. eine Acrylatverbindung schnell zu einem gleichmäßigen, glatten, geschlossenen Film auf Folie, Platte oder Holzwerkstoffplatte, so dass ein gleichmäßiges Aufbringen und Fixieren der Folie oder Platte gewährleistet ist. Durch die Gleichmäßigkeit des Lackfilms ist die Wahrnehmung eines Dekors auf der Holzwerkstoffplatte verbessert.

Es wird ein strahlungs- oder UV-härtender Lack eingesetzt, da dieser Lack durch die Folie oder Platte hindurch ausgehärtet werden kann. Dabei kann der Lack unter Einwirkung von UV-Licht oder Elektronenstrahlung, im Gegensatz z. B. zu chemisch härtenden Verbindungen, ohne Freisetzung von Gasen, also z. B. ohne Schaumbildung aushärten. Dies ist ein weiterer Beitrag zur verbesserten optischen Wahrnehmung von Dekors auf der Holzwerkstoffoberfläche.

Nicht alle Folien oder Platten sind ohne Weiteres geeignet zum Aufbringen von UVoder strahlungshärtenden Lacken wie z. B. Acrylatverbindungen. Dieser Nachteil kann auf verschiedene Weise behoben werden, indem z. B. Haftvermittler aufgebracht werden, die besser auf der Folie oder Platte haften als der Lack und die gleichzeitig eine verbesserte Haftung des Lacks auf der Folie oder Platte gewährleisten. Solche Haftvermittler oder Primer werden z. B. von den Firmen Hesse und 3 H Lacke angeboten. Alternativ oder ergänzend kann die Folie oder Platte einer an sich bekannten Koronavorbehandlung oder einer an sich ebenfalls vorbekannten Plasmavorbehandlung unterzogen werden, um die Oberfläche der Folie für entweder einen Haftvermittler oder einen niedrigviskosen UV- oder strahlungshärtenden Lack besser aufnahmebereit zu gestalten.

Weiter kann das Aufbringen der Folie oder Platte auf die Holzwerkstoffoberfläche dadurch verbessert werden, dass eine zweite Schicht eines niedrigviskosen, UV- oder strahlungshärtenden Lacks auch auf die Oberfläche der Holzwerkstoffplatte aufgebracht wird, wenn die erste Schicht eines solchen Lacks auf die Folie oder die Platte aufgetragen wurde. Alternativ kann eine zweite Schicht eines niedrigviskosen, UV- oder strahlungshärtenden Lacks auf die Folie oder Platte aufgebracht werden, wenn die erste Schicht eines solchen Lacks auf die Holzwerkstoffplatte aufgetragen wurde. Die zweite Schicht des Lacks bindet mit der ersten Schicht eines solchen Lacks zu einer einheitlichen Schicht ab.

Nach einer vorteilhaften Ausführung der Erfindung wird nur eine geringe Menge des Lacks benötigt, um die Folie oder die Platte aufzubringen. 5 g/m² bis 30 g/m² reichen aus, um die Folie dauerhaft auf die Holzwerkstoffplatte aufzubringen. Diese Menge kann entweder in einer Schicht auf die Folie aufgetragen werden oder sie kann in mehreren Schichten aufgetragen werden, entweder nur auf die Folie oder auf die Folie und die Holzwerkstoffplatte.

Der Lack kann mit an sich bekannten Vorrichtungen aufgebracht werden; er kann mit einer Walzenanordnung aufgewalzt werden, er kann mit einer Düse, insbesondere mit einer Schlitzdüse, aufgedüst werden oder er kann mit einer Gießvorrichtung aufgegossen werden, z. B. mit einer so genannten Curtain-Coating-Anlage. Es ist als vorteilhaft anzusehen, dass bekannte und verfügbare Anlagen bzw. Vorrichtungen zum Aufbringen von Lack eingesetzt werden können, so dass die Erfindung auf technisch einfache Weise umgesetzt werden kann.

Die Folie oder die Platte wird bevorzugt mittels eines an sich bekannten Rollenkalanders oder einer Andruckrolle auf die Holzwerkstoffplatte aufgebracht, nachdem der Lack aufgebracht wurde. Mittels des Rollenkalanders wird die Folie meist von einer Endlos-Rolle abgerollt und glatt und faltenfrei auf der Holzwerkstoffplatte abgerollt, um die Folie durch Anhaften an der mindestens ersten Lackschicht auf der Holzwerkstoffplatte zu fixieren.

Gegenstand der Erfindung ist weiter eine Holzwerkstoffplatte gemäß Anspruch 9. Die Holzwerkstoffplatte kann eine Massivholzplatte, eine Sperrholzplatte, eine Spanplatte oder eine Faserplatte sein. Es kann sich um eine mit Kunstharz gebundene oder um eine mineralisch gebundene Holzwerkstoffplatte handeln. Es kann aber, nicht erfindungsgemäß, auch eine mit Holzfasern durchsetzte Kunststoffplatte mit einer Folie oder Platte versehen werden.

Die Oberfläche der Holzwerkstoffplatte weist ein Dekor auf. Es kann sich dabei um ein unmittelbar auf die Oberfläche der Holzwerkstoffplatte aufgetragenes Dekor aus Farbe handeln. Häufig ist die Holzwerkstoffplatte aber auch mit einer Beschichtung kaschiert, die auf die Oberfläche der Holzwerkstoffplatte geklebt ist. Eine solche beschichtete Holzwerkstoffplatte eignet sich insbesondere dann für die Durchführung des erfindungsgemäßen Verfahrens, wenn der Schichtstoff Melamin als Bindemittel aufweist. Niedrigviskose Lacke können besonders einfach und fest mit einer Oberfläche abbinden, die Melamin aufweist.

Die Folie ist vorteilhaft aus Polyethylenterephtalat (PET), weil dieses Material besonders transparent und gleichmäßig ist. Alternativ können auch Polyethylen, (PE) Polypropylen (PP), Polycarbonat (PC), Polyester, Polyvinylchlorid (PVC), Polystyrol, Cellophan, Polylactid oder Celluloseacetat eingesetzt werden.

Die Folie wird vorteilhaft eingesetzt, wenn der Glanzgrad der Oberfläche eingestellt werden soll. Entsprechend kann die Folie eine mattierte oder glänzende Oberfläche aufweisen. Die glänzende Oberfläche kann eine hochglänzende oder eine spiegelglänzende Oberfläche sein. Gerade bei Folien mit glänzenden, hoch- oder spiegelglänzenden Oberflächen erweist sich eine dünne, aus einem niederviskosen UV- oder strahlungshärtenden Lack hergestellte erste und/oder zweite Schicht zwischen Holzwerkstoffplatte und Folie als vorteilhaft, weil eine dünne, gleichmäßige und hoch transparente Schicht aus einer Acrylatverbindung, einer Polyester-, Polyurethan- oder Epoxyacrylatverbindung einen annähernd unverfälschten oder unverzerrten optischen Eindruck des Dekors ermöglicht.

Die Folie oder die Platte sind transparent. Sie können aber auch eingefärbt sein, wobei die Transparenz erhalten bleibt. Die Folie oder die Platte können eine glatte oder strukturierte Oberfläche aufweisen, beispielsweise eine Prägung aufweisen. Die Folie oder die Platte kann Hartstoffpartikel, z. B. Korundpartikel, enthalten, um die Kratzfestigkeit der Oberfläche zu verbessern. Folie oder Platte können weiterhin Additive enthalten, die verbesserte antistatische oder antibakterielle Eigenschaften gewährleisten oder die die Chemikalien- und/oder Witterungsbeständigkeit sowie die Schlagfestigkeit und die Prägbarkeit verbessern und die der Oberfläche gute Antifingerprint-Eigenschaften verleihen.

Die Folie kann von beliebiger Stärke sein, vorteilhaft ist jedoch die Verwendung von Folien einer Stärke von 10 µm bis 5000 µm, bevorzugt 10 µm bis 500µm. Auf diese Weise trägt auch die Folie zu einem unveränderten, klaren optischen Eindruck der Oberfläche der Holzwerkstoffplatte bzw. des Dekors bei. Besonders geeignet sind dünne Folien von 10 µm bis 100 µm, mit denen bei geringer Schichtdicke und geringem Materialeinsatz ein signifikanter optischer Effekt erreicht wird.

Platten, die auf eine Holzwerkstoffplatte aufgebracht werden können, sind Platten aus Kunststoff oder Kunstharz, insbesondere Acrylplatten oder Melaminplatten, die optional durch Fasern verstärkt sein können. Platten können z. b. eine größere Dichte oder eine größere Steifigkeit aufweisen als Folien. Eingesetzt werden Platten mit einer Stärke von bis zu 5 mm.

Details der Erfindung werden am Beispiel eines Ausführungsbeispiels näher erläutert. Es zeigen:

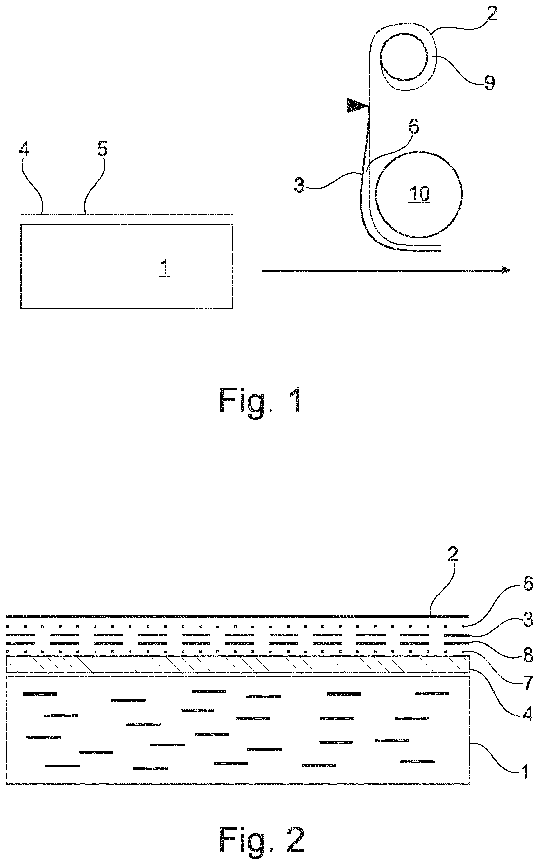

- Fig. 2: eine schematische Darstellung einer erfindungsgemäßen, mit einer Folie versehenen Holzwerkstoffplatte.
- Fig. 1: eine schematische Darstellung einer Anlage zur Durchführung des erfindungsgemäßen Verfahrens,
- Fig. 3: eine schematische Darstellung einer Anlage zum Aufbringen von Lack auf eine Holzwerkstoffplatte.

Wie in Fig. 1 dargestellt, wird auf eine Holzwerkstoffplatte 1 eine Folie 2 aufgeklebt. Die Holzwerkstoffplatte 1 ist hier eine Spanplatte, kann aber auch eine Massivholzplatte, eine Faserplatte, eine nicht erfindungsgemäße, von Holzfasern durchsetzte Kunststoffplatte oder eine Sperrholzplatte sein. Die Holzwerkstoffplatte 1 ist vorliegend mit einem Kunstharz gebunden, kann aber auch mineralisch gebunden sein. Die Folie 2 ist vorliegend aus PET, kann aber auch aus PE, PP, PC oder anderen Kunststoffen sein einschließlich Folien aus Celluloseacetat oder Cellophan. Die Folie 2 ist spiegelglänzend, kann aber in anderen Ausführungen auch hochglänzend, glänzend oder matt ausgebildet sein. Die PET-Folie 2 enthält feine Korundpartikel, die die Kratzfestigkeit der Oberfläche verbessern, so dass der Glanz besser erhalten bleibt.

In einer einfachen Ausführung ist zwischen der Holzwerkstoffplatte 1 und der Folie 2 lediglich eine Lackschicht 3 angeordnet. Die erste Lackschicht 3 verbindet die Holzwerkstoffplatte und die Folie. Die Lackschicht ist dünn; der Lack wird in einer Menge von 5 g/m² bis 30 g/m² aufgetragen. Der Lack ist wasserverdünnbar. Als Lack wird eine niedrigviskose Acrylatverbindung eingesetzt; als Alternative zum Acrylat können auch niedrigviskose Polyester, Polyurethan oder Epoxyacrylatverbindungen eingesetzt werden. Der Lack kann auf die Holzwerkstoffplatte 1 oder die Folie 2 aufgetragen werden.

Beim Ausführungsbeispiel nach Fig. 1 und Fig. 2 ist auf die Holzwerkstoffplatte 1 ein Schichtstoff 4 aufgeklebt. Der Schichtstoff 4 ist auf der der Holzwerkstoffplatte 1 abgekehrten Seite 5 mit einem Dekor bedruckt. Der Schichtstoff 4 weist Melaminharz als Bindemittel auf, das bereits ausgehärtet und somit inert ist. Diese Holzwerkstoffplatte 1 wird gemäß Fig. 1 in Pfeilrichtung gefördert, so dass die Folie 2 aufgebracht werden kann. Bei der Ausführung in Fig. 1 sehen wir zudem eine Schicht eines Primer 6, die auf die Folie 2 aufgebracht ist, und die gut auf der Folie haftet. Gleichzeitig haftet die erste Lackschicht 3 gut auf dem Primer 6, so dass eine entsprechend gute Bindung der Acrylatverbindung an der Folie gegeben ist.

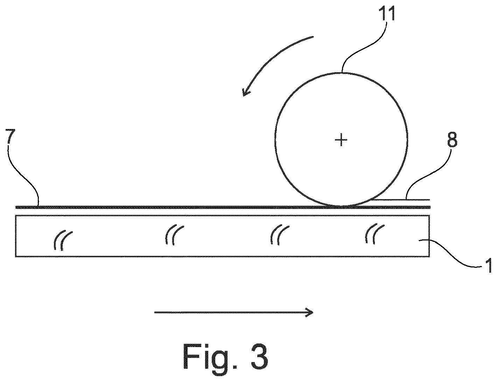

Bei der Ausführung nach Fig. 2 ist zusätzlich ein Haftvermittler 7 auf die Oberfläche des Schichtstoffs 4 aufgebracht, um die Anbindung der Folie an die Holzwerkstoffplatte zu verbessern. Weiterhin ist eine zweite Lackschicht 8 auf den Haftvermittler 7 aufgebracht. Fig. 3 zeigt eine Holzwerkstoffplatte 1, die in Pfeilrichtung gefördert wird. Auf die Holzwerkstoffplatte 1 wird mittels einer Lackauftragswalze 11 die zweite Lackschicht aufgetragen. In gleicher Weise kann mit einer Walze auch der Haftvermittler aufgetragen werden. Auf die so lackierte Holzwerkstoffplatte wird dann die Folie 2 aufgebracht, so wie in Fig. 1 dargestellt, mit einer ersten Lackschicht 3 oder ohne dass Lack auf die Folie 2 aufgebracht wurde. Der Lack der ersten Lackschicht 3 kann sich von dem Lack der zweiten Lackschicht 8 unterscheiden, sofern beide Lacke gut miteinander abbinden. Hier wird jedoch für die erste und die zweite Lackschicht 3, 8 der gleiche Lack eingesetzt.

Die erste Lackschicht 3 der Folie 2 ist mit der zweiten Acrylatschicht 8 auf der Holzwerkstoffplatte 1 beim Aushärten mittels UV-Strahlung oder Elektronenstrahlung zu einer einheitlichen Acrylatschicht verschmolzen. Diese Schicht ist im Vergleich zu einer Schicht aus einem Hot-Melt PUR-Klebstoff sehr dünn und sehr transparent. Licht, dass durch die Folie 2 und die erste Lackschicht 3 auf das Dekor fällt, wird bei der erfindungsgemäßen Holzwerkstoffplatte1 sehr viel weniger gestreut als bei bekannten mit einer Folie beschichteten Holzwerkstoffplatten. Entsprechend ist ein besonders klarer und unverstellter bzw. unverzerrter Blick auf das Dekor möglich. Es kann also eine brillante, hochwertige Oberfläche bereitgestellt werden.

Fig. 1 zeigt in schematischer Darstellung die Herstellung der mit einer Folie 2 beschichteten Holzwerkstoffplatte 1. Die Holzwerkstoffplatte 1 wurde in einem vorangehenden, nicht zur Erfindung gehörenden Verfahrensschritt mit einem melamingebundenen Schichtstoff 4 laminiert, dessen nicht zur Holzwerkstoffplatte 1 gekehrte Oberfläche 5 mit einem Dekor bedruckt ist. In einem hier dargestellten, aber optionalen Schritt wird die Oberfläche 5 mit einem Haftvermittler 7 in einer Menge von 5 g/m² und anschließend mit einer Acrylatverbindung besprüht, die sich als zweite Lackschicht 8 auf dem Haftvermittler niederschlägt. Es werden 15 g/m² Acrylat für die zweite Lackschicht 8 aufgetragen.

Oberhalb der Holzwerkstoffplatte 1 wird eine PET-Folie 2 von 100 µm Dicke von einer Endlosrolle 9 zugeführt. Nach dem Abrollen von der Endlos-Rolle 9 wird auf die hier vertikal geförderte Folie 2 zuerst ein Primer 6 in einer Menge von 5 g/m² aufgesprüht, anschließend werden 15 g/m² einer Acrylatverbindung zum Ausbilden einer ersten Lackschicht 3 auf der Folie 2 aufgesprüht. Das Sprühen des Haftvermittlers 7, der zweiten Lackschicht 8, des Primers 6 und der ersten Lackschicht 3 erfolgt mit an sich bekannten Schlitzdüsen.

Zum Erzeugen der erste Lackschicht 3 auf der Folie 2 bzw. der zweiten Lackschicht 8 wird eine Acrylatverbindung mit einer Viskosität von 30 Sekunden Auslaufzeit bei 23 °C in einem Auslaufbecher mit 4 mm Düse gemäß DIN 53211 eingesetzt. Diese niedrigviskose Acrylatverbindung, die als Tröpfchen auf die Folie 2 bzw. die Oberfläche 5 gelangt, verfließt sofort zu einem dünnen und gleichmäßigen Film auf der Oberfläche der Folie bzw. der Oberfläche 5 des Schichtstoffs 4 auf der Holzwerkstoffplatte 1.

Die Folie 2 mit Primer 6 und mit der ersten Lackschicht 3 wird dann mittels eines Rollenkalanders 10 auf der Holzwerkstoffplatte 1 fixiert. In diesem Zustand haftet die Folie 2 auf der Holzwerkstoffplatte 1, doch die erste Lackschicht 3 und die zweite Lackschicht 8 sind noch nicht ausgehärtet. Die Folie 2 könnte noch von der Platte abgezogen werden. Das Aushärten der ersten und zweiten Lackschicht 3, 8 erfolgt mittels Strahlungshärtung, alternativ auch mittels ultravioletter Strahlung (UV-Härtung). Dabei erweist sich die geringe Dicke der Lackschichten 3 und 8, die sich aus dem geringen Mengenauftrag ergibt, aber auch die sehr transparente Acrylatverbindung gegenüber den bisher üblichen hochviskosen PUR-Hot-Melt-Klebstoffschichten als vorteilhaft, weil ein besonders unverzerrter Blick auf das Dekor auf der Oberfläche 5 des Schichtstoffs 4 möglich ist. Es wird nur wenig Licht gestreut, die Brillanz der spiegelglänzenden PET-Folie 2 bleibt erhalten. Gleichzeitig macht es sich vorteilhaft bemerkbar, dass der Lack, hier die Acrylatverbindung, ohne Anwendung von Druck oder von Temperaturen über 100 °C aushärtet. Es gasen keine Reaktionsprodukte aus, die feinste Blasen oder Schaum bilden könnten, was zu einer Trübung der Acrylatschicht führen könnte. Außerdem ist die eingesetzte Menge der Acrylatverbindung so gering, dass das Aushärten schnell erfolgt. Auch diese Tatsachen tragen dazu bei, dass mit dem offenbarten Verfahren eine ungestörte Wahrnehmung des Dekors auf der Oberfläche 5 möglich ist.

## Patentansprüche

1. Verfahren zum Aufbringen einer transparenten Folie (2) oder einer transparenten Platte auf eine Holzwerkstoffplatte (1) mit einem Dekor mit den Schritten
- Aufbringen einer ersten Schicht eines transparenten niedrigviskosen, UVoder strahlungshärtenden Lacks (3) auf die Folie, die Platte oder die Holzwerkstoffplatte,
- Fixieren der Folie oder Platte durch den Lack auf der Holzwerkstoffplatte und
- Aushärten des Lacks zum Herstellen einer dauerhaften Verbindung zwischen Folie und Holzwerkstoffplatte.

2. Verfahren nach Anspruch 1, **dadurch gekennzeichnet, dass** als Lack eine Acrylatverbindung, eine Polyester-, Polyurethan- oder Epoxyacrylatverbindung eingesetzt wird.

3. Verfahren nach Anspruch 1 oder 2, **dadurch gekennzeichnet, dass** ein Haftvermittler (7) auf die Folie, die Platte und/oder die Holzwerkstoffplatte aufgebracht wird.

4. Verfahren nach mindestens einem der vorstehenden Ansprüche, **dadurch gekennzeichnet, dass** vor dem Aufbringen des Lacks die Folie oder Platte eine Korona- oder Plasmavorbehandlung erfährt oder dass ein Primer (6) auf die Folie oder die Platte aufgebracht wird.

5. Verfahren nach mindestens einem der vorstehenden Ansprüche, **dadurch gekennzeichnet, dass** eine zweite Schicht (8) eines niedrigviskosen, UV- oder strahlungshärtenden Lacks auf die Holzwerkstoffplatte aufgebracht wird, sofern die erste Schicht Lack auf die Folie oder Platte aufgetragen wurde, und dass eine zweite Schicht eines niedrigviskosen, UV- oder strahlungshärtenden Lacks auf die Folie oder die Platte aufgetragen wird, sofern die erste Schicht Lack auf die Holzwerkstoffplatte aufgetragen wurde.

6. Verfahren nach mindestens einem der vorstehenden Ansprüche, **dadurch gekennzeichnet, dass** 5 g/m² bis 30 g/m² Lack aufgebracht wird.

7. Verfahren nach mindestens einem der vorstehenden Ansprüche, **dadurch gekennzeichnet, dass** der Lack durch eine Walzenanordnung, eine Schlitzdüse oder eine Gießanordnung auf die Folie, die Platte oder die Holzwerkstoffplatte aufgebracht wird.

8. Verfahren nach mindestens einem der vorstehenden Ansprüche, **dadurch gekennzeichnet, dass** die Folie oder die Platte durch einen Kalander (10) auf der Holzwerkstoffplatte fixiert wird.

9. Holzwerkstoffplatte (1), aufweisend eine Holzwerkstoffplatte mit einem Dekor, die dauerhaft mit einer transparenten Folie (2) oder einer transparenten Platte beschichtet ist, und bei der eine erste Schicht eines aushärtenden, transparenten Lacks (3) zum Herstellen dieser dauerhaften Verbindung zwischen der Holzwerkstoffplatte und der Folie oder der Platte angeordnet ist.

10. Holzwerkstoffplatte nach Anspruch 9, **dadurch gekennzeichnet, dass** die Holzwerkstoffplatte eine beschichtete Oberfläche aufweist, insbesondere eine mit einem Schichtstoff oder einer Kunstharzschicht beschichtete Oberfläche.

11. Holzwerkstoffplatte nach Anspruch 9 oder 10, **dadurch gekennzeichnet, dass** die Oberfläche der Holzwerkstoffplatte ein Melaminharz aufweist.

12. Holzwerkstoffplatte nach mindestens einem der Ansprüche 9 bis 11, **dadurch gekennzeichnet, dass** die Folie aus einem Kunststoff der Gruppe hergestellt ist, die umfasst Polyethylenterephtalat, Polyethylen, (PE) Polypropylen (PP), Polycarbonat (PC), Polyester, Polyvinylchlorid (PVC), Polystyrol, Cellophan, Polylactid oder Celluloseacetat.

13. Holzwerkstoffplatte nach mindestens einem der Ansprüche 9 bis 12, **dadurch gekennzeichnet, dass** die Platte einen Kunststoff oder einen mineralischen Werkstoff aufweist.

14. Holzwerkstoffplatte nach Anspruch 13, **dadurch gekennzeichnet, dass** die Platte Fasern aufweist.

15. Holzwerkstoffplatte nach mindestens einem der Ansprüche 9 bis 14, **dadurch gekennzeichnet, dass** die Folie oder die Platte eine matte, glänzende oder spiegelglänzende Oberfläche aufweist.

16. Holzwerkstoffplatte nach mindestens einem der Ansprüche 9 bis 15, **dadurch gekennzeichnet, dass** die Folie oder die Platte Hartstoffpartikel aufweist.

17. Holzwerkstoffplatte nach mindestens einem der Ansprüche 9 bis 14, **dadurch gekennzeichnet, dass** die Folie eine Stärke von 10 µm bis 5000 µm aufweist.

## Claims

1. A method for applying a transparent film (2) or a transparent sheet to a composite wood board (1) with a decoration, comprising the steps of
- applying a first layer of a transparent, low-viscosity, UV- or radiation-curable lacquer (3) to the film, panel or composite wood board,
- fixing the film or sheet on the composite wood board by means of the lacquer, and
- curing the lacquer in order to produce a permanent bond between the film and composite wood board.

2. The method according to claim 1, **characterized in that** an acrylate, polyester, polyurethane or epoxy acrylate compound is used as the lacquer.

3. The method according to claim 1 or 2, **characterized in that** an adhesion promoter (7) is applied to the film, sheet and/or composite wood board.

4. The method according to at least one of the preceding claims, **characterized in that** the film or sheet undergoes a corona or plasma pretreatment prior to application of the lacquer or **in that** a primer (6) is applied to the film or sheet.

5. The method according to at least one of the preceding claims, **characterized in that** a second layer (8) of a low-viscosity, UV- or radiation-curable lacquer is applied to the composite wood board if the first lacquer layer was applied to the film or sheet, and **in that** a second layer of a low-viscosity, UV- or radiation-curable lacquer is applied to the film or sheet if the first lacquer layer was applied to the composite wood board.

6. The method according to at least one of the preceding claims, **characterized in that** 5 g/m² to 30 g/m² of lacquer is applied.

7. The method according to at least one of the preceding claims, **characterized in that** the lacquer is applied to the film, sheet or composite wood board by means of a roller assembly, slotted nozzle or casting assembly.

8. The method according to at least one of the preceding claims, **characterized in that** the film or sheet is fixed on the composite wood board by means of a calender (10).

9. A composite wood board (1), comprising a composite wood board with a decoration, which is permanently coated with a transparent film (2) or a transparent sheet, and wherein a first layer of a curable, transparent lacquer (3) is arranged between the composite wood board and the film or sheet in order to produce this permanent bond.

10. The composite wood board according to claim 9, **characterized in that** the composite wood board comprises a coated surface, in particular a surface coated with a laminate or a layer of synthetic resin.

11. The composite wood board according to claim 9 or 10, **characterized in that** the surface of the composite wood board comprises a melamine resin.

12. The composite wood board according to at least one of claims 9 to 11, **characterized in that** the film is made from a plastics material of the group comprising polyethylene terephthalate, polyethylene (PE), polypropylene (PP), polycarbonate (PC), polyester, polyvinyl chloride (PVC), polystyrene, cellophane, polylactide or cellulose acetate.

13. The composite wood board according to at least one of claims 9 to 12, **characterized in that** the sheet comprises a plastics material or a mineral material.

14. The composite wood board according to claim 13, **characterized in that** the sheet comprises fibers.

15. The composite wood board according to at least one of claims 9 to 14, **characterized in that** the film or sheet comprises a matte, glossy or mirror-gloss surface.

16. The composite wood board according to at least one of claims 9 to 15, **characterized in that** the film or sheet comprises hard material particles.

17. The composite wood board according to at least one of claims 9 to 14, **characterized in that** the film has a thickness of 10 µm to 5000 µm.

## Revendications

1. Procédé d'application d'une feuille transparente (2) ou d'une plaque transparente sur un panneau à base de bois (1) avec un décor, comprenant les étapes suivantes :
- application d'une première couche de laque transparente peu visqueuse durcissant aux UV ou au rayonnement (3) sur la feuille, la plaque ou le panneau à base de bois,
- fixation de la feuille ou de la plaque sur le panneau à base de bois par le biais de la laque et
- durcissement de la laque pour la réalisation d'une liaison durable entre la feuille et le panneau à base de bois.

2. Procédé selon la revendication 1, **caractérisé en ce qu'**un composé d'acrylate, un composé de polyester, de polyuréthane ou d' époxy-acrylate est utilisé en tant que peinture.

3. Procédé selon la revendication 1 ou 2, **caractérisé en ce qu'**un agent adhésif (7) est appliqué sur la feuille, la plaque et/ou le panneau à base de bois.

4. Procédé selon l'une au moins des revendications précédentes, **caractérisé en ce qu'**avant l'application de la laque, la feuille ou la plaque est soumise à un prétraitement corona ou plasma ou **en ce qu'**un primaire (6) est appliqué sur la feuille ou la plaque.

5. Procédé selon l'une au moins des revendications précédentes, **caractérisé en ce qu'**une deuxième couche (8) de laque peu visqueuse durcissant aux UV ou au rayonnement est appliquée sur le panneau à base de bois, dans la mesure où la première couche de laque a été appliquée sur la feuille ou la plaque, et **en ce qu'**une deuxième couche de laque peu visqueuse durcissant aux UV ou au rayonnement est appliquée sur la feuille ou la plaque, dans la mesure où la première couche de laque a été appliquée sur le panneau à base de bois.

6. Procédé selon l'une au moins des revendications précédentes, **caractérisé en ce que** 5g / m² à 30g / m² de laque sont appliqués.

7. Procédé selon l'une au moins des revendications précédentes, **caractérisé en ce que** la laque est appliquée par un ensemble de rouleaux, une buse à fente ou un ensemble de coulée sur la feuille, la plaque ou le panneau à base de bois.

8. Procédé selon l'une au moins des revendications précédentes, **caractérisé en ce que** la feuille ou la plaque est fixée sur le panneau à base de bois par une calandre (10).

9. Panneau à base de bois (1) présentant un panneau à base de bois avec un décor, laquelle est revêtue durablement avec une feuille transparente (2) ou une plaque transparente, et dans laquelle une première couche de laque durcissable transparente (3) est disposée entre le panneau à base de bois et la feuille ou la plaque pour la réalisation de cette liaison durable.

10. Panneau à base de bois selon la revendication 9, **caractérisée en ce que** le panneau à base de bois présente une surface revêtue, en particulier une surface revêtue avec un stratifié ou une couche de résine synthétique.

11. Panneau à base de bois selon la revendication 9 ou 10, **caractérisée en ce que** la surface de le panneau à base de bois présente une résine de mélamine.

12. Panneau à base de bois selon l'une au moins des revendications 9 à 11, **caractérisée en ce que** la feuille est réalisée à partir d'une matière plastique issue du groupe comportant le polyéthylène téréphtalate, le polyéthylène (PE), le polypropylène (PP), le polycarbonate (PC), le polyester, le chlorure de polyvinyle (PVC), le polystyrène, la cellophane, le polylactide ou l'acétate de cellulose.

13. Panneau à base de bois selon l'une au moins des revendications 9 à 12, **caractérisée en ce que** la plaque présente une matière plastique ou un matériau minéral.

14. Panneau à base de bois selon la revendication 13, **caractérisée en ce que** la plaque présente des fibres.

15. Panneau à base de bois selon l'une au moins des revendications 9 à 14, **caractérisée en ce que** la feuille ou la plaque présente une surface matte, brillante ou miroitante.

16. Panneau à base de bois selon l'une au moins des revendications 9 à 15, **caractérisée en ce que** la feuille ou la plaque présente des particules de matière dure.

17. Panneau à base de bois selon l'une au moins des revendications 9 à 14, **caractérisée en ce que** la feuille présente une épaisseur de 10 µm à 5000 µm.
